# EUROPÄISCHE PATENTSCHRIFT

(11) **EP 1 065 128 B1**
(45) Veröffentlichungstag und Bekanntmachung des Hinweises auf die Patenterteilung: **17.11.2004**
(21) Anmeldenummer: 00113464.2
(22) Anmeldetag: 26.06.2000
(51) Int. Cl.: B61L 15/00

(54) **System zur Initialisierung von Zügen auf Basis eines Datenkommunikationssystems, bei dem allen Kommunikationsteilnehmern die Informationen in der Initialisierungsphase zugänglich sind**
Initializing system for trains based on a data communication system in which information is accessible for all communication participants during the initialization phase
Système d'initialisation pour trains à base d'un système de communication de données dans lequel des informations sont accessibles pour tous les participants à la communication dans la phase d'initialisation

(30) Priorität: 28.06.1999 DE 19929644
(43) Veröffentlichungstag der Anmeldung: 03.01.2001
(73) Patentinhaber: Railion Deutschland AG, 55116 Mainz (DE)
(72) Erfinder: Gralla, Dietmar, Dr., 32425 Minden (Westf) (DE); Witte, Stefan, Dr., 32425 Minden (Westf) (DE); Heinz, Sebastian, 32423 Minden (Westf) (DE)
(74) Vertreter: Zinken-Sommer, Rainer

(56) Entgegenhaltungen:
- DE-U- 29 521 037

## Beschreibung

Die Erfindung betrifft ein Datenkommunikationssystem im Zug, mit einem Zugbus zur Kommunikation zwischen Fahrzeugen des Zuges und jedem Fahrzeug zugeordneten internen Fahrzeugbussystemen, die über jeweils ein Gateway an den Zugbus angekoppelt sind, mit den im Oberbegriff des Anspruchs 1 genannten Merkmalen.

Datenkommunikationssysteme der gattungsgemäßen Art sind bekannt. Bei diesen erfolgt eine Datenkommunikation einerseits über einen Zugbus zwischen den Fahrzeugen des Zuges. Andererseits erfolgt eine Datenkommunikation innerhalb eines Fahrzeuges über einen Fahrzeugbus. Zur Datenkommunikation zwischen Systemkomponenten der Fahrzeuge sind die jeweiligen Fahrzeugbussysteme über Gateways mit dem Zugbus verbunden.

Voraussetzung für eine Datenkommunikation zwischen den einzelnen Fahrzeugen innerhalb des Zuges ist eine Initialisierung des Datenkommunikationssystems. Hierbei werden den einzelnen Gateways (Fahrzeugen) durch eine sogenannte Zugtaufe eindeutige feste Adressierungen zugeordnet. Diese Adressierung ist zwingende Voraussetzung für eine fahrzeugindividuelle Datenkommunikation innerhalb des Zuges.

Um diese Initialisierung und eine spätere Steuerung der Datenkommunikation durchführen zu können, ist es erforderlich, einem Fahrzeug des Zuges eine Master-Funktion zuzuordnen. Alle weiteren Fahrzeuge des Zuges erhalten eine Slave-Funktion. Master-Funktionen werden hierbei von Systemkomponenten des Zuges übernommen, die aus Vorgaben eines Triebfahrzeugführers, eines automatischen Steuerungssystems oder dergleichen Befehle für einzelne Subsysteme des Zuges, wie beispielsweise Antrieb, verteilter Antrieb, Bremse oder dergleichen, generieren. Slave-Funktionen werden von den Systemkomponenten des Zuges übernommen, die diese Befehle umsetzen.

Besitzt ein Zug mehrere masterfähige Fahrzeuge, beispielsweise zwei Triebfahrzeuge, Steuerwagen oder dergleichen, muss sichergestellt sein, dass nur eines der masterfähigen Fahrzeuge tatsächlich die Master-Funktion übernimmt, das heißt aktiv ist, da ansonsten eine sichere Steuerung über den Zugbus nicht gewährleistet werden kann. Bei den bekannten Datenkommunikationssystemen erfolgt die Festlegung des aktiven Mastersystems mit der Initialisierung, also mit der Zugtaufe.

Als Mittler zwischen dem Zugbus und den Fahrzeugbussen dienen Gateways, über die die Fahrzeugbusse an den Zugbus gekoppelt sind. Die Gateways hören die über den Zugbus übertragenden Signale und Informationen ab und übertragen die für das zugehörigen Fahrzeug relevanten Informationen und Signale auf den Fahrzeugbus. Umgekehrt nimmt es die für andere Fahrzeuge im Zug bestimmten Informationen und Signale vom eigenen Fahrzeugbus auf und überträgt diese auf den Zugbus. Ferner ist bekannt, die Gateways als Datenspeicher für fahrzeugspezifische Größen, wie zum Beispiel Länge, Leergewicht, Bremseigenschaften, Fahrzeugnummer und so weiter, einzusetzen. Diese fahrzeugspezifischen Größen werden während der Initialisierung des Datenkommunikationssystems (Zugtaufe) von den Fahrzeugen dem Master übermittelt, der hieraus die Zugzusammensetzung und den Status des Zuges ermittelt.

Die Gateways umfassen bekannterweise ein Schaltmittel, mittels dem der Zugbus an der Kuppelstelle zum Fahrzeugbus aufgetrennt beziehungsweise geschlossen werden kann. Je nach Schaltstellung des Schaltmittels besteht eine durchgehende Verbindung über den Zugbus von vor und nach dem jeweiligen Gateway angekuppelten Gateways miteinander oder diese Verbindung besteht eben nicht. Bei der Initialisierung des Datenkommunikationssystems wird bekannterweise so vorgegangen, dass ausgehend von dem festgelegten aktiven Master die physikalische Reihenfolge der Fahrzeuge des Zuges bestimmt wird. Nach dem Öffnen aller Schaltmittel wird immer das nächste Gateway vom Master aufgerufen und diesem eine Ordnungskennzahl innerhalb des Zuges zugeteilt. Das Gateway übermittelt hierauf seine fahrzeugspezifischen Größen dem Master und schließt das Schaltmittel, so dass eine Initialisierung des nächstfolgenden Gateways (Fahrzeuges) auf gleiche Weise erfolgen kann. Der Vorgang ist abgeschlossen, wenn alle Gateways (Fahrzeuge) des Zuges initialisiert sind und ihre entsprechenden fahrzeugspezifischen Größen dem Master mitgeteilt haben. Entsprechende Verfahren bzw. Vorrichtungen sind z. B. aus DE 295 21 037 bekannt. So werden nach DE 295 21 037 die fahrzeugspezifischen Daten unmittelbar nach der Initialisierung des jeweiligen Gateways an den Master gesendet.

Insbesondere bei dem aus DE 295 21 037 bekannten Datenkommunikationssystem ist nachteilig, dass die fahrzeugspezifischen Größen von den einzelnen Gateways dem Master zu einem Zeitpunkt gesendet werden, zu dem noch nicht sämtliche Gateways (Fahrzeuge) initialisiert sind. Hierdurch stehen noch nicht initialisierten Gateways beziehungsweise den über die Gateways angeschlossenen Systemkomponenten nicht alle fahrzeugspezifischen Größen aller Fahrzeuge des Zuges zur Verfügung. Insbesondere, wenn der Zug mehrere masterfähige Fahrzeuge besitzt, von denen nur eines zur Durchführung der Initialisierung aktiv ist, muss nach erfolgter Initialisierung des gesamten Zuges ein zusätzlicher Datentransfer über den Zugbus erfolgen, damit sämtliche masterfähigen Fahrzeuge über die gleichen Zuginformationen, wie Status des Zuges, Zugzusammensetzung oder dergleichen, verfügen.

Der Erfindung liegt die Aufgabe zugrunde, ein Datenkommunikationssystem der gattungsgemäßen Art zu schaffen, bei dem in einfacher Weise eine Initialisierung mit geringem Zeitaufwand und eine schnelle Master-Übergabe möglich ist.

Erfindungsgemäß wird diese Aufgabe durch ein Datenkommunikationssystem mit den in Anspruch 1 genannten Merkmalen gelöst. Dadurch, dass bei der Initialisierung (Zugtaufe) des Datenkommunikationssystems alle Gateways des Zuges zunächst in einen Vorinitialisierungszustand (Taufzustand) bringbar sind, und nachdem alle Gateways diesen Vorinitialisierungszustand angenommen haben, die Initialisierung des Zuges erfolgt, so dass alle Mastersysteme die Initialisierungsinformationen mithören können, wird vorteilhaft erreicht, dass während der Initialisierung des Zuges von den einzelnen Gateways übermittelte fahrzeugspezifische Größen von allen, an den Zugbus angekoppelten Gateways beziehungsweise den daran angeschlossenen Systemkomponenten empfangen werden können. Durch die Vorinitialisierungszustände wird zunächst bevorzugt die durchgehende Datenverbindung über den Zugbus hergestellt und die physische Reihenfolge der Fahrzeuge innerhalb des Zuges bestimmt. Der eigentliche Initialisierungsvorgang erfolgt anschließend, nachdem die physische Reihenfolge feststeht. Hierdurch können über ein Gateway in den Zugbus eingespeiste fahrzeugspezifische Informationen von sämtlichen, an den Zugbus angeschlossenen Gateways beziehungsweise Systemkomponenten empfangen und gespeichert beziehungsweise verarbeitet werden. Somit verfügen nach Abschluss der Initialisierung des Datenkommunikationssystems sämtliche masterfähigen Systeme sofort über den gleichen Informationsstand, den Status des Zuges, die Zugzusammensetzung oder dergleichen betreffend. Eine nochmalige, nach Abschluss der Initialisierung erforderliche Datenübertragung über den Zugbus ist somit nicht notwendig.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: schematisch eine Konfiguration eines Zuges mit zwei masterfähigen Fahrzeugen;
- Figur 2: den schematischen Aufbau eines Gateways und
- Figur 3: den Ablauf einer Initialisierung eines Datenkommunikationssystems des Zuges.

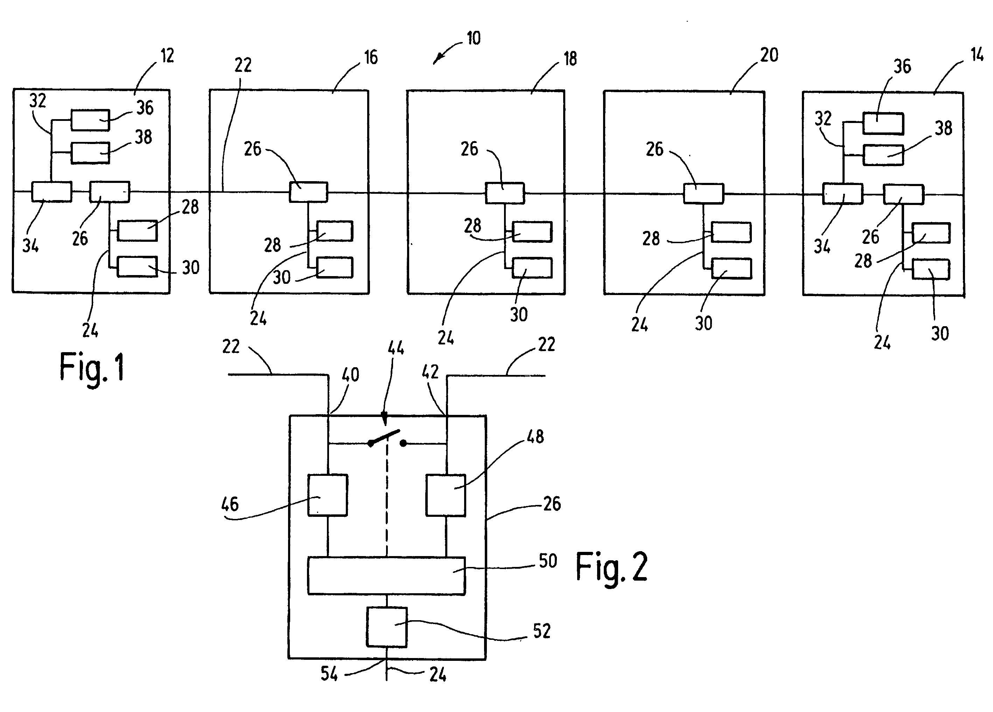

Figur 1 zeigt schematisch einen Zug 10. Der Zug 10 umfasst zwei Triebfahrzeuge 12 beziehungsweise 14 sowie zwischen den Triebfahrzeugen 12 und 14 angeordnete Fahrzeuge 16, 18 und 20. Es ist selbstverständlich, dass die dargestellte Konfiguration des Zuges 10 lediglich beispielhaft ist. So können nach weiteren Ausführungsbeispielen innerhalb des Zuges 10 auch mehr oder weniger als drei Fahrzeuge sowie mehr Triebfahrzeuge beziehungsweise eine andere zusammenstellung des Zuges 10 vorgesehen sein. Für die Erfindung wichtig ist, dass der Zug 10 wenigstens zwei masterfähige Systeme, hier in den Triebfahrzeugen 12 und 14, umfasst.

Die Fahrzeuge 12, 14, 16, 18 und 20 sind über einen Zugbus 22 miteinander verbunden. Der Zugbus 22 kann beispielsweise ein CAN-Bus, ein Funkbus oder dergleichen sein. Die Fahrzeuge 12, 14, 16, 18 und 20 besitzen jeweils einen fahrzeuginternen Slave-Fahrzeugbus 24, die über Gateways 26 mit dem Zugbus 24 gekoppelt sind. An die Slave-Fahrzeugbusse 24 sind Systemkomponenten 28 beziehungsweise 30 angeschlossen. Diese Systemkomponenten 28 und 30 können beispielsweise fahrzeugbezogene Antriebseinrichtungen, Bremseinrichtungen oder dergleichen sein. Dies sind in jedem Fall Komponenten, die infolge empfangener Befehle Aktionen ausführen. Dies können auch Komponenten sein, die Informationen über Betriebszustände der jeweiligen Fahrzeuge liefern.

Die Triebfahrzeuge 12 und 14 besitzen ferner jeweils einen Master-Fahrzeugbus 32, der über ein Gateway 34 mit dem Zugbus 22 gekoppelt ist. An den Master-Fahrzeugbus 32 sind Systemkomponenten 36 beziehungsweise 38 angeschlossen, die aus Vorgaben eines Triebfahrzeugführers oder eines elektronischen Steuersystems Befehle zum Führen des Zuges 10 geben können. Diese Befehle werden während einer Zugfahrt über eines der Gateways 34 in den Zugbus 22 eingespeist und können über die Gateways 26 von den, entsprechende Steuerbefehle ausführende Systemkomponenten 28 und 30 empfangen werden. Eine derartige Datenkommunikation innerhalb des Zuges 10 über den Zugbus 22 beziehungsweise die Fahrzeugbusse 24 und einen der Master-Fahrzeugbusse 32 ist an sich bekannt.

Figur 2 zeigt schematisch den Aufbau der Gateways 26, über die die Ankopplung der Fahrzeugbusse 24 an den Zugbus 22 erfolgt. Das Gateway 26 besitzt zwei Eingänge 40 beziehungsweise 42, an die jeweils der Zugbus 22 angeschlossen ist. Der Zugbus 22 wird somit quasi über das Gateway 26 geführt. Die Eingänge 40 und 42 sind einerseits mit einem Schaltmittel 44 und andererseits jeweils mit einem Transceiver 46 beziehungsweise 48 verbunden. Die Transceiver 46 und 48 sind mit einem Mikroprozessor 50 verbunden, der über einen weiteren Transceiver 52 mit einem Ausgang 54 verbunden ist, an dem der Fahrzeugbus 24 angeschlossen ist. Ein derartiger Aufbau der Gateways 26 ist an sich bekannt.

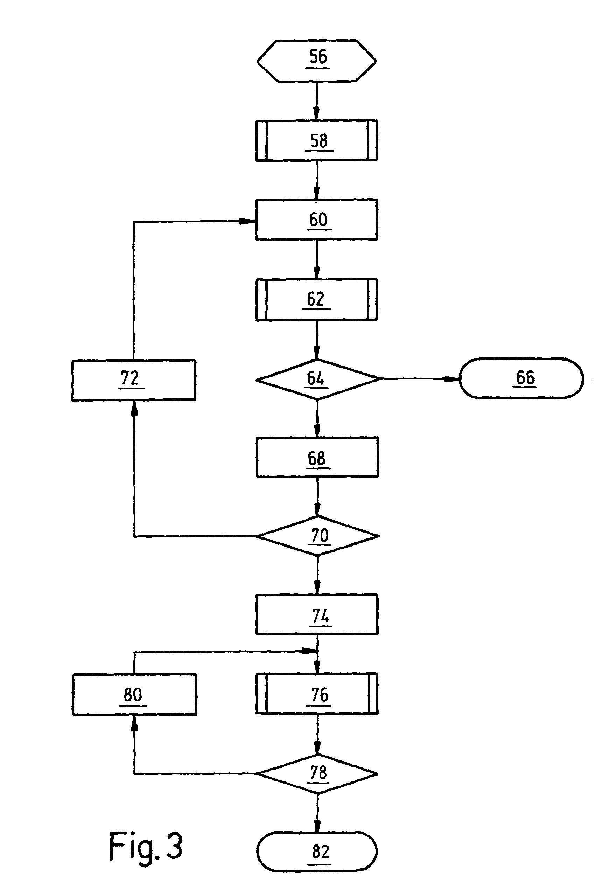

Eine Initialisierung des Datenkommunikationssystems erfolgt während einer Zugtaufe des Zuges 10. Das heißt, nach Zusammenstellen des Zuges 10 wird über einen der Master-Fahrzeugbusse 32 die Zugtaufe durchgeführt, die insbesondere das Erfassen der Anzahl der Fahrzeuge, das Initialisieren der an den Fahrzeugbussen 24 angeschlossenen Systemkomponenten 28 und 30, das Erkennen eines Zugendes sowie die Bestimmung der physikalischen Daten und des Status des Zuges 10 umfassen. Bei der Initialisierung des Datenkommunikationssystems ist sicherzustellen, dass nur genau einer der Master-Fahrzeugbusse 32 aktiv ist, das heißt, nur dieser ist in der Lage, Befehle in das Datenkommunikationssystem zu geben. Damit jedoch bei einer Master-Obergabe an einen anderen Master-Fahrzeugbus 32 innerhalb des Zuges 10 auch dieser sämtliche Informationen und Daten über den Zug 10 besitzt, erfolgt die Initialisierung (Zugtaufe) des Datenkommunikationssystems auf folgende, anhand des Flussdiagrammes in Figur 3 verdeutlichte Art und Weise:

Zunächst wird die Initialisierung des Datenkommunikationssystems gemäß Feld 56 gestartet. Der aktive Master innerhalb des Zuges 10 veranlasst dann in einem nächsten Schritt 58 alle Gateways 26 des Zuges 10 ihr Schaltmittel 44 zu öffnen. Hierdurch sind die Gateways 26 in Taufbereitschaft. Ein, die physische Anzahl der Fahrzeuge des Zuges 10 ermittelnder Ordnungsnummernzähler wird gleichzeitig zurück, das heißt auf Eins, gesetzt. Anschließend werden im Schritt 60 alle Gateways 26 aufgefordert, sich zu melden. Wegen der geöffneten Schaltmittel 44 besteht jedoch keine durchgehende Verbindung über den Zugbus 22, so dass sich nur das erste Gateway 26 melden kann. Im nächsten Schritt 62 bekommt das erste sich meldende Gateway 26 dann die erste Ordnungsnummer zugeteilt. In einem Schritt 64 wird in einem Test eine nochmalige Nachfrage nach ungetauften Gateways 26 im Zugbus 22 ausgelöst. Meldet sich daraufhin ein weiteres Gateway 26, muss ein Fehler vorliegen, da sämtliche Schaltmittel 44 der Gateways 26 noch geöffnet sind und so sich nur eins, nämlich das erste Gateway nach dem Master melden kann. In diesem Fall wird gemäß Schritt 66 die Initialisierung des Datenkommunikationssystems abgebrochen. Meldet sich kein weiteres ungetauftes Gateway 26, wird das bereits getaufte und mit einer Ordnungsnummer versehene Gateway 26 gemäß Schritt 68 in einen Zustand "getauft" (Vorinitialisierungszustand) versetzt und aufgefordert, sein Schaltmittel 44 zu schließen. Es ergibt sich also der Taufzustand des Gateways während der Taufe und der getaufte Zustand des Gateways nach der Taufe.

Durch das dann geschlossene Schaltmittel 44 ist das nächstfolgende Gateway 26 im Zugbus 22 für den Master nunmehr ansprechbar. Es erfolgt zunächst die Abfrage 70, ob das gerade getaufte Gateway 26 das letzte Gateway des Zuges ist. Wenn "Nein", wird gemäß Schritt 72 der Ordnungsnummernzähler des Masters für das dazugekommene Gateway 26 inkrementiert und die Routine mit Schritt 60 wiederholt. Dieser Vorgang wird so oft wiederholt, bis sämtliche Gateways 26 im Zugbus 22 den getauften Zustand angenommen haben. Dieser getaufte Zustand ist dadurch gekennzeichnet, dass jedes Gateway 26 eine Ordnungsnummer im Zug 10 zugeteilt bekommen hat und sämtliche Schaltmittel 44 aller Gateways 26 geschlossen sind. Somit besteht über den Zugbus 22 eine durchgehende Kommunikationsverbindung über den gesamten Zug 10.

Ergibt die Abfrage 70, dass das zuletzt in den getauften Zustand versetzte Gateway 26 das letzte im Zug 10 ist, wird gemäß Schritt 74 im Master die Anzahl der getauften Gateways 26 abgespeichert und der Ordnungsnummernzähler auf Eins zurückgesetzt. Dies bedeutet, ab nun ist die Datenkommunikation über den Zugbus 22 freigegeben, und alle an den Zugbus 22 angeschlossenen Teilnehmer können die über die Gateways 26 übertragenen Daten, Informationen oder dergleichen empfangen. Anschließend wird gemäß Schritt 76 das erste Gateway 26 im Zug aufgefordert, seine fahrzeugspezifischen Daten beziehungsweise Größen mitzuteilen. Diese Informationen können nun von allen am Zugbus 22 angeschlossenen masterfähigen Systemen -im Beispiel gemäß Figur 1 dem Masterbussystem 32 im Fahrzeug 12 und dem Masterbussystem 32 im Fahrzeug 14-mitgehört und abgespeichert werden. In Schritt 78 wird durch Vergleich mit der bekannten Anzahl der Gateways ermittelt, ob das seine fahrzeugspezifischen Daten mitteilende Gateway 26 das letzte im Zug 10 gewesen ist. Bei "Nein" wird gemäß Schritt 80 der Ordnungsnummernzähler entsprechend der gespeicherten Anzahl der Gateways 26 im Zug 10 um eine Position hochgesetzt, so dass das nächste Gateway 26 seine fahrzeugspezifischen Größen und Daten einspeist. Dieser Vorgang wird wiederholt, bis sämtliche Gateways 26 ihre fahrzeugspezifischen Daten eingespeist haben. Wird gemäß Abfrage 78 festgestellt, dass das letzte, bereits getaufte Gateway 26 seine fahrzeugspezifischen Daten mitgeteilt hat, wird die Initialisierung des Zuges gemäß Schritt 82 beendet.

Durch die erläuterte Initialisierung des Datenkommunikationssystems und des Zuges wird erreicht, dass zunächst sämtliche Gateways 26 in den getauften Zustand versetzt werden und die Übergabe der fahrzeugspezifischen Daten beziehungsweise Größen und Informationen erst nach Taufe aller Gateways 26 durchgeführt wird. Hierdurch wird sichergestellt, dass sämtliche fahrzeugspezifischen Daten und Informationen zugleich von allen an den Zugbus 22 angeschlossenen masterfähigen Systemen empfangen und abgespeichert werden können. Somit stehen allen masterfähigen Systemen 32, beispielsweise bei einer schnellen Master-Übergabe im Zug 10, bereits alle fahrzeugspezifischen Informationen zur Verfügung. Eine zusätzliche Überspielung der Informationen vom zunächst aktiven Mastersystem, das die Initialisierung durchführt, ist somit nicht mehr notwendig.

## Patentansprüche

1. Datenkommunikationssystem im Zug, mit einem Zugbus zur Kommunikation zwischen Fahrzeugen des Zuges und mit jedem Fahrzeug zugeordneten internen Fahrzeugbussystemen, mit wenigstens zwei Master-Fahrzeugbussystemen innerhalb des Zuges, wobei eines der Master-Fahrzeugbussysteme bei einer Initialisierung des Datenkommunikationssystems als aktiver Master schaltbar ist und alle Steuerfunktionen des Zuges übernimmt, und mit Slave-Fahrzeugbussystemen, über die Systemkomponenten zur Steuerung des Zuges ansteuerbar sind, wobei die Fahrzeugbussysteme über jeweils ein Gateway mit dem Zugbus gekoppelt sind, die Gateways ein Schaltmittel umfassen, mit dem der Zugbus auftrennbar beziehungsweise schließbar ist, **dadurch gekennzeichnet, daß** bei der Initialisierung des Datenkommunikationssystems alle Gateways (26) zunächst in einen getauften Zustand gebracht werden, und nachdem alle Gateways (26) des Zuges (10) den getauften Zustand besitzen, die Initialisierung des Zuges erfolgt, so daß alle Mastersysteme die Initialisierungsinformationen mithören können.

2. Datenkommunikationssystem nach Anspruch 1, **dadurch gekennzeichnet, daß** der Taufzustand die Bestimmung der physischen Reihenfolge der Fahrzeuge (12, 14, 16, 18, 20) und die Herstellung einer durchgehenden Verbindung des Zugbusses (22) durch Schließen der Schaltmittel (44) der Gateways (26) beinhaltet.

3. Datenkommunikationssystem nach einem der vorhergehenden Ansprüche, **dadurch gekennzeichnet, daß** der Taufzustand die Vergabe einer fortlaufenden Ordnungsnummer an alle an den Zugbus (22) gekoppelte Gateways (26) beinhaltet.

4. Datenkommunikationssystem nach einem der vorhergehenden Ansprüche, **dadurch gekennzeichnet, daß** entsprechend der vergebenen Anzahl der Ordnungsnummern die im getauften Zustand befindlichen Gateways (26) aufgefordert werden, die jeweiligen fahrzeugspezifischen Daten in den Zugbus (22) zu senden.

## Claims

1. A data communication system for a train, with a train bus for the communication between vehicles of the train and with internal vehicle bus systems assigned to each vehicle, with at least two master vehicle bus systems within the train, wherein one of the master vehicle bus systems can be switched into an active master state and take over all control functions of the train during the initialization of the data communication system, and with slave vehicle bus systems for acting upon system components that serve for controlling the train, wherein the vehicle bus systems are respectively coupled to the train bus via a gateway, and wherein the gateways comprise a switching means for opening and closing the train bus, **characterized in that** all gateways (26) are initially transformed into a christened state during the initialization of the data communication system, and **in that** the initialization of the train takes place after all gateways (26) of the train (10) are in the christened state such that all master systems are able to monitor the initialization information.

2. The data communication system according to Claim 1, **characterized in that** the christened state comprises the determination of the physical sequence of the vehicles (12, 14, 16, 18, 20) and the production of a continuous connection via the train bus (22) by closing the switching means (44) of the gateways (26).

3. The data communication system according to one of the preceding claims, **characterized in that** the christened state comprises the assignment of a sequential ordinal number to all gateways (26) coupled to the train bus (22).

4. The data communication system according to one of the preceding claims, **characterized in that** the christened gateways (26) are respectively instructed to transmit their specific vehicle data to the train bus (22) in accordance with the assigned ordinal numbers.

## Revendications

1. Système de communication de données dans le train, comprenant un bus de train pour la communication entre des véhicules du train et des systèmes de bus de véhicules internes associés à chaque véhicule, au moins deux systèmes de bus de véhicules maîtres à l'intérieur du train, un des systèmes de bus de véhicules maîtres étant activable lors d'une initialisation du système de communication de données en tant que maître actif et assurant toutes les fonctions de commande du train, et des systèmes de bus de véhicules asservis grâce auxquels les composants de système servant à commander le train peuvent être contrôlés, les systèmes de bus de véhicules étant couplés respectivement par le biais d'une passerelle au bus de train, les passerelles comprenant un moyen de commutation qui permet de séparer ou de fermer le bus de train, **caractérisé en ce que**, lors de l'initialisation du système de communication de données, toutes les passerelles (26) peuvent d'abord être mises en état immatriculé et qu'une fois que toutes les passerelles (26) du train (10) possèdent l'état immatriculé, l'initialisation du train a lieu, de sorte que tous les systèmes maîtres peuvent capter les informations d'initialisation.

2. Système de communication de données selon la revendication 1, **caractérisé en ce que** l'état d'immatriculation comprend la définition de l'ordre physique des véhicules (12, 14, 16, 18, 20) et l'établissement d'une liaison continue du bus de train (22) par fermeture des moyens de commutation (44) des passerelles (26).

3. Système de communication de données selon l'une quelconque des revendications précédentes, **caractérisé en ce que** l'état d'immatriculation comprend l'attribution d'un numéro d'ordre progressif à toutes les passerelles (26) couplées au bus de train (22).

4. Système de communication de données selon l'une quelconque des revendications précédentes, **caractérisé en ce qu'**en fonction du nombre de numéros d'ordre attribués, il est demandé aux passerelles (26) se trouvant en état immatriculé d'envoyer les données spécifiques aux véhicules respectives dans le bus de train (22).
